# EUROPEAN PATENT APPLICATION

(11) **EP 4 714 655 A1**
(43) Date of publication of application: **25.03.2026**
(21) Application number: 25203415.2
(22) Date of filing: 19.09.2025
(51) Int. Cl.: B32B 27/36, B32B 7/12, B32B 15/085, B32B 15/20, B32B 27/08, B32B 27/32

(54) **EASY TEAR LAMINATES FOR FOOD PACKAGING**

(30) Priority: 20.09.2024 US 202418891822
(71) Applicant: Winpak Ltd., Winnipeg, MB R3J 3T3 (CA)
(72) Inventor: BILGEN, Mustafa, Fayettville, 30215 (US); SPLENDIANI, Antonietta, Fayetteville, 30215 (US); RANVILLE, Bradley, Winnipeg, R2V 2K9 (CA); HARWOOD, Mozerti, Sharpsburg, 30277 (US); IMBURGIA, James, Delancey, 13752 (US); DARTIAILH, Christopher, Winnipeg, R3M 0L9 (CA); RAFEI, Mehdi, Winnipeg, R3Y 1H6 (CA)
(74) Representative: Potter Clarkson

(57) **Abstract**

Described herein are multi-layer laminates and methods of manufacturing said laminates, including multi-layer laminates having improved tear resistance without compromising on other properties such as strength or processability. The disclosed multi-layer laminates include at least a first layer that is suitable for use in a food packaging article, and provides easy tearability (i.e., low or very low tear resistance). In embodiments, this easy tear layer may form the outermost layer of the food packaging article and thereby enable a consumer to tear the food packaging article without the use of a tool such as a knife or a pair of scissors.

## Description

### Field of the Disclosure

The present disclosure is directed generally to multi-layer laminates and methods of manufacturing said laminates. More specifically, the present disclosure relates to multi-layer laminates having reduced tear resistance without compromising seal strength and processability on packaging equipment. The multi-layer laminates of the present disclosure can find particular application in the food, beverage, dairy, chemicals, medical device and pharmaceutical packaging industry.

### Background

The global food packaging industry is governed at various national and international levels by a number of different organizations and regulations. Food contact materials (e.g., packaging materials that contact food) not only need to comply with the rules and regulations of these various organizations, but also need to provide a positive user experience. For example, it is known that food packaging can affect a consumer's overall experience and perception of the product being consumed. Further, depending on the application of the food contact material or product packaging in general, this may change what mechanical and/or chemical properties are desirable. In the context of flexible food packaging, sealed food packs (e.g., pouches, sachets, etc.) are very hard to tear by hand and may require a tool such as a knife or scissors to cut open. This is because, historically, materials that were easily torn were not considered suitable for food packaging applications. As such, one solution that was developed was to design a designated tear feature (i.e., a defined perforation at an edge of the packaging). However, it would be beneficial to provide improved food packaging materials that can be torn by hand without such perforations without compromising its other physical, chemical, and barrier properties.

### Summary of the Disclosure

According to one embodiment of the present disclosure, a multi-layer laminate is provided. The multi-layer laminate may include: a first layer comprising at least one polymer material selected from the group consisting of a polyhydroxyalkanoate (PHA), a polybutylene adipate terephthalate (PBAT), a polybutylene succinate (PBS), polylactic acid (PLA), thermoplastic starch (TPS), starch blended thermoplastic, and a cyclic block copolymer (CBC), wherein the first layer has a thickness of from about 4 µm to about 100 µm, and wherein the first layer has a machine direction (MD) Elmendorf tear resistance of at most about 600 g and/or a transverse direction (TD) Elmendorf tear resistance of at most about 600 g.

In an aspect, the first layer may have a machine direction (MD) Elmendorf tear resistance of from about 20 g to about 300 g and/or a transverse direction (TD) Elmendorf tear resistance of about 20 g to about 300 g.

In an aspect, the first layer may include: from about 40 wt% to about 100 wt% of the polymer material based on the total weight of the first layer; and from about 0 wt% to about 60 wt% of one or more additives based on the total weight of the first layer.

In an aspect, the multi-layer laminate may further include: a second layer having a first surface bonded to the first layer, wherein the second layer comprises a metal and/or metal alloy, and wherein the second layer has a thickness of from about 3 µm to about 100 µm.

In an aspect, the metal and/or metal alloy may include aluminum or copper.

In an aspect, the first and second layers may be bonded together through: (i) adhesive lamination using a chemical adhesive; (ii) extrusion lamination; or (iii) heat lamination

In an aspect, the multi-layer laminate may further include: a third layer bonded to a second surface of the second layer and comprising a polymer material selected from the group consisting of a polyethylene (PE), a polyhydroxyalkanoate (PHA), a polybutylene adipate terephthalate (PBAT), a polybutylene succinate (PBS), a cyclic block copolymer (CBC), polylactic acid (PLA), starch blended thermoplastic, and a thermoplastic starch (TPS), wherein the third layer has a thickness of from about 4 µm to about 100 µm, and wherein the third layer has a machine direction (MD) Elmendorf tear resistance of at most about 600 g and/or a transverse direction (TD) Elmendorf tear resistance of at most about 600 g.

In an aspect, the third layer may include: from about 40 wt% to about 100 wt% of the polymer material based on the total weight of the third layer; and from about 0 wt% to about 60 wt% of a mineral filler based on the total weight of the third layer.

In an aspect, the third layer may have a machine direction (MD) Elmendorf tear resistance of from about 20 g to about 300 g and/or a transverse direction (TD) Elmendorf tear resistance of about 20 g to about 300 g.

In an aspect, the second and third layers may be bonded together through: (i) adhesive lamination using a chemical adhesive; (ii) extrusion lamination; or (iii) heat lamination.

In an aspect, the first and third layers may have the same composition.

According to another embodiment of the present disclosure, a food-packaging article formed from a multi-layer laminate is provided. The multi-layer laminate may include: a first layer comprising at least one polymer material selected from the group consisting of a polyhydroxyalkanoate (PHA), a polybutylene adipate terephthalate (PBAT), a polybutylene succinate (PBS), polylactic acid (PLA), a starch blended thermoplastic, thermoplastic starch (TPS), and a cyclic block copolymer (CBC), wherein the first layer has a thickness of from about 4 µm to about 100 µm, and wherein the first layer has a machine direction (MD) Elmendorf tear resistance of at most about 600 g and/or a transverse direction (TD) Elmendorf tear resistance of at most about 600 g.

In an aspect, the food-packaging article may be a stick pouch or a sachet.

According to still another embodiment of the present disclosure, a method of manufacturing a multi-layer laminate is provided. The method may include: providing a first layer material, a second layer material, a lamination machine; applying a first adhesive coating to at least one surface of the first layer material; and contacting the surface of the first layer material having the first adhesive coating with the second layer material.

In an aspect, the first layer material may include at least one polymer material selected from the group consisting of a polyhydroxyalkanoate (PHA), a polybutylene adipate terephthalate (PBAT), a polybutylene succinate (PBS), polylactic acid (PLA), starch blended thermoplastic, thermoplastic starch (TPS), and a cyclic block copolymer (CBC), wherein the first layer material forms a first sheet having a thickness of from about 4 µm to about 100 µm, and wherein the first sheet has a machine direction (MD) Elmendorf tear resistance and/or a transverse direction (TD) Elmendorf tear resistance of at most about 600 g.

In an aspect, the method may include: forming the first sheet from the first layer material through a blown film, cast film, extrusion coating process, or liquid coating.

In an aspect, the second layer material may include a metal and/or metal alloy, wherein the second layer material forms a second sheet having a thickness of from about 3 µm to about 100 µm.

In an aspect, the method may further include: providing a third layer material to the lamination machine; applying a second adhesive coating to at least one surface of the second layer material; and contacting the surface of the second layer material having the second adhesive coating with the third layer material.

In an aspect, the third layer material may include a polymer material selected from the group consisting of a polyethylene (PE), a polypropylene (PP), a polyester, a polyamide, a polyhydroxyalkanoate (PHA), a polybutylene adipate terephthalate (PBAT), a polybutylene succinate (PBS), a cyclic block copolymer (CBC), polylactic acid (PLA), starch blended thermoplastic, and a thermoplastic starch (TPS), wherein the third layer material forms a third sheet having a thickness of from about 4 µm to about 100 µm, and wherein the third sheet has a machine direction (MD) Elmendorf tear resistance of at most about 600 g and/or a transverse direction (TD) Elmendorf tear resistance of at most about 600 g.

In an aspect, the method may further include: forming the third sheet from the third layer material through a blown film, cast film, extrusion coating process, or liquid coating.

These and other aspects of the various embodiments will be apparent from and elucidated with reference to the embodiments described hereinafter.

### Brief Description of the Drawings

In the drawings, like reference characters generally refer to the same parts throughout the different views. Also, the drawings are not necessarily to scale, emphasis instead generally being placed upon illustrating the principles of the various embodiments.
FIG. 1 is an illustration of a food packaging article formed from a multi-layer laminate in accordance with aspects of the present disclosure.
FIG. 2 is an illustration of an embodiment of a multi-layer laminate useful in certain applications in accordance with aspects of the present disclosure.
FIG. 3 is a flowchart illustrating a method of manufacturing a multi-layer laminate useful in food packaging applications in accordance with aspects of the present disclosure.

### Detailed Description of Embodiments

The intended application of a food packaging material or product packaging in general can change what mechanical and/or chemical properties are desirable. As described herein, it has been advantageously found that certain multi-layer laminates and methods of manufacturing said laminates exhibit a combination of mechanical, chemical, and/or barrier properties, including reduced tear resistance, without compromising on its other properties. In the context of the present disclosure, easy tear refers to the ability of a food packaging article to be easily torn (i.e., opened) by hand without the use of a tool like a knife or pair of scissors.

Furthermore, the multi-layer laminates provided for herein do not require perforations, can be recyclable, can be biodegradable, or can be compostable. As such, the methods of manufacturing do not require a scoring step to create tearable perforations, eliminate the use of non-environmentally friendly substrates, and can be produced through several different lamination processes.

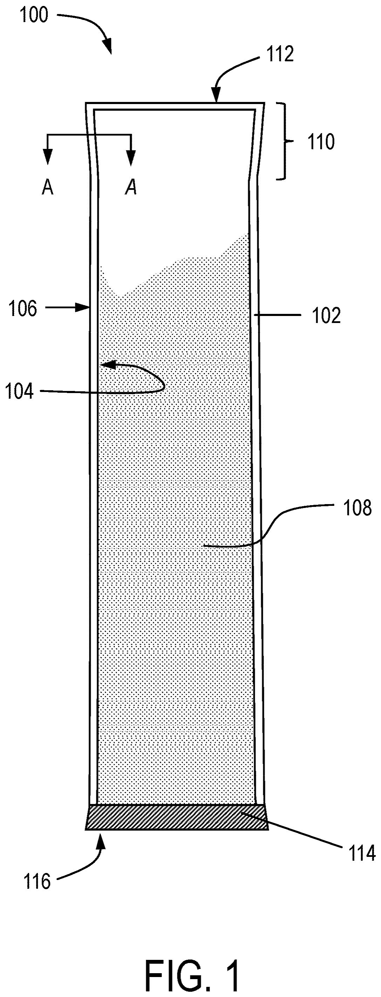

For example, with reference to FIG. 1, an exemplary food packaging article 100 is illustrated in accordance with aspects of the present disclosure. The food packaging article 100 may be formed from a multi-layer laminate 102 having an inner surface 104 and an outer surface 106. As shown, the inner surface 104 of the multi-layer laminate 102 may contact a food / consumable product that is sealed or otherwise contained within the food packaging article 100. In particular embodiments, the food product can comprise a solid, a liquid, and/or a semi-liquid foodstuff. For example, in some embodiments, the food product can include, but is not limited to, yogurt, a condiment, a dip, a sauce, a dressing, and/or the like.

Although the food packaging article 100 is illustrated as an elongated pouch, other food packaging articles 100 incorporating the multi-layer laminate 102 are contemplated. In some embodiments, the food packaging article 100 can be, for example and without limitation, a cup, a tube, a packet, and/or the like. In embodiments, the food packaging article may be single-use.

According to the present disclosure, the food packaging article 100 has easy tear such that an individual can tear the multi-layer laminate 102 without requiring a perforation and without using a tool such as a knife or pair of scissors. For example, in particular embodiments, the food packaging article 100 may be manufactured such that the foodstuff 108 does not occupy the entire internal volume of the food packaging article 100, thereby creating an empty section 110 at a first end 112 of the article 100 where the multi-layer laminate 102 can be safely and easily torn open. The food packaging article 100 may also be sealed at one or more ends. In the example of FIG. 1, the food packaging article 100 includes a sealed section 114 at a second end 116 of the food packaging article 100. However, it should be appreciated more than one end 112, 116 may be sealed and that other shapes / types of food packaging articles may have more than two sealed sections 114.

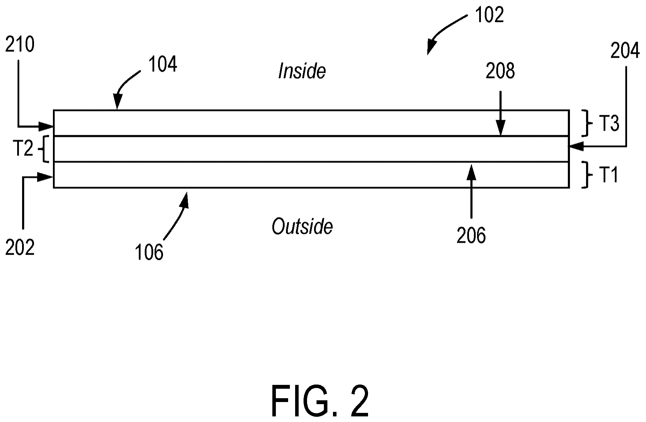

With reference to FIG. 2, an embodiment of a multi-layer laminate 102 is illustrated in accordance with various aspects of the present disclosure. In particular embodiments, the multi-layer laminate 102 includes at least a first layer 202 forming an external surface 106 of the multi-layer laminate 102.

In embodiments, the first layer 202 can have a thickness (T1) of at least 4 µm. In further embodiments, the first layer 202 can have a thickness (T1) of at most about 100 µm. In particular various embodiments, the first layer 202 can have a thickness (T1) of from about 4 µm to about 100 µm, including from about 4 µm to about 10 µm, from about 10 µm to about 15 µm, from about 15 µm to about 20 µm, from about 20 µm to about 25 µm, from about 25 µm to about 30 µm, from about 30 µm to about 35 µm, from about 35 µm to about 40 µm, from about 40 µm to about 45 µm, from about 45 µm to about 50 µm, from about 50 µm to about 55 µm, from about 55 µm to about 60 µm, from about 60 µm to about 65 µm, from about 65 µm to about 70 µm, from about 70 µm to about 75 µm, from about 75 µm to about 80 µm, from about 80 µm to about 85 µm, from about 85 µm to about 90 µm, from about 90 µm to about 95 µm, from about 95 µm to about 100 µm, and/or a range having any combination of endpoints thereof.

It should be understood that the first layer 202 can form at least the outermost layer of the multi-layer laminate 102, and therefore an individual would have to begin by tearing this outermost layer 202. As described herein, the first layer 202 can have an improved tear initiation, which may be quantified according to a propagation tear resistance of plastic film and thin sheeting by pendulum method, sometimes referred to as an Elmendorf Tear, according to ASTM D1922 (e.g. D1922-23).

More specifically, according to ASTM D1922 (e.g. D1922-23), a plurality of samples are cut from a plastic film in the machine direction and in the transverse direction. Unless otherwise noted herein, constant radius samples were used in this testing, and each layer of a testing sample has a thickness of 1.6 mils + 0.2 mil. Each sample is positioned in the testing equipment and clamped in place. A cutting knife of the testing equipment is used to create a slit (sometimes referred to as a notch or perforation) in the sample which ends 43mm from the far edge of the sample, and a pendulum is released to propagate the slit through the remaining sample. The energy loss by the pendulum is used to calculate an average tearing force.

Additionally, a modified Elmendorf Tear testing protocol was also developed in accordance with the present disclosure. The modified Elmendorf Tear test follows the same procedures and guidelines provided by ASTM D 1922 (e.g. D 1922-23) except that no slit is created. A pendulum is still released to tear through the sample and the energy loss by the pendulum is still used to calculate an average tearing force.

Further, because tearing a food packaging article 100 formed from a multi-layer laminate 102 involves simultaneously tearing two layers of the laminate 102, the Elmendorf Tear test was also modified to include both (1) a single layer of the first layer 202, and (2) a stack of two layers of the first layer 202. As such, the first layer 202 may have a two-layer tear resistance value, which is obtained by stacking two films of the first layer 202 together within the testing equipment. Unless otherwise noted, the total thickness of the two-layer stacks tested according to this method is about 3.2 mils ± 0.4 mils.

In embodiments, the first layer 202 may have a single layer transverse direction (TD) tear resistance of at most 600g when measured according to ASTM D1922 (e.g. D1922-23). In particular embodiments, the first layer 202 may have a single layer transverse direction (TD) tear resistance of from about 20g to about 600g, including from about 20g to about 30g, from about 30g to about 40g, from about 40g to about 50g, from about 50g to about 100g, from about 100g to about 150g, from about 150g to about 200g, from about 200g to about 250g, from about 250g to about 300g, from about 300g to about 350g, from about 350g to about 400g, from about 400g to about 450g, from about 450g to about 500g, from about 500g to about 550g, from about 550g to about 600g, and/or a range having any combination of endpoints thereof.

In some embodiments, the first layer 202 may have a single layer transverse direction (TD) tear resistance of at most 600g when measured according to the modified (no notch) ASTM D1922 (e.g. modified (no notch) D 1922-23) protocol described above. In particular embodiments, the first layer 202 may have a modified (no notch) single layer transverse direction (TD) tear resistance of from about 30g to about 600g, including from about 30g to about 40g, from about 40g to about 50g, from about 50g to about 60g, from about 60g to about 70g, from about 70g to about 80g, from about 80g to about 90g, from about 90g to about 100g, from about 100g to about 150g, from about 150g to about 200g, from about 200g to about 250g, from about 250g to about 300g, from about 300g to about 350g, from about 350g to about 400g, from about 400g to about 450g, from about 450g to about 500g, from about 500g to about 550g, from about 550g to about 600g, and/or a range having any combination of endpoints thereof.

In embodiments, the first layer 202 may have a single layer machine direction (MD) tear resistance of at most 600g when measured according to ASTM D1922 (e.g. D1922-23). In particular embodiments, the first layer 202 may have a single layer machine direction (MD) tear resistance of from about 20g to about 600g, including from about 20g to about 30g, from about 30g to about 40g, from about 40g to about 50g, from about 50g to about 100g, from about 100g to about 150g, from about 150g to about 200g, from about 200g to about 250g, from about 250g to about 300g, from about 300g to about 350g, from about 350g to about 400g, from about 400g to about 450g, from about 450g to about 500g, from about 500g to about 550g, from about 550g to about 600g, and/or a range having any combination of endpoints thereof.

In some embodiments, the first layer 202 may have a single layer machine direction (MD) tear resistance of at most 600g when measured according to the modified (no notch) ASTM D1922 (e.g. modified (no notch) D 1922-23) protocol described above. In particular embodiments, the first layer 202 may have a modified (no notch) single layer machine direction (MD) tear resistance of from about 30g to about 600g, including from about 30g to about 40g, from about 40g to about 50g, from about 50g to about 60g, from about 60g to about 70g, from about 70g to about 80g, from about 80g to about 90g, from about 90g to about 100g, from about 100g to about 150g, from about 150g to about 200g, from about 200g to about 250g, from about 250g to about 300g, from about 300g to about 350g, from about 350g to about 400g, from about 400g to about 450g, from about 450g to about 500g, from about 500g to about 550g, from about 550g to about 600g, and/or a range having any combination of endpoints thereof.

In embodiments, the first layer 202 may also have a double-layer transverse direction (TD) tear resistance of at most 600g when measured according to the modified (stacked layers, with notch) ASTM D1922 (e.g. modified (stacked layers, with notch) D1922-23) protocol described above. In particular embodiments, the first layer 202 may have a modified (stacked layers, with notch) double-layer transverse direction (TD) tear resistance of from about 30g to about 600g, including from about 20g to about 30g, from about 30g to about 40g, from about 40g to about 50g, from about 50g to about 100g, from about 100g to about 150g, from about 150g to about 200g, from about 200g to about 250g, from about 250g to about 300g, from about 300g to about 350g, from about 350g to about 400g, from about 400g to about 450g, from about 450g to about 500g, from about 500g to about 550g, from about 550g to about 600g, and/or a range having any combination of endpoints thereof.

In some embodiments, the first layer 202 may also have a double-layer transverse direction (TD) tear resistance of at most 1500g when measured according to the modified (no notch, stacked layers) ASTM D1922 (e.g. modified (no notch, stacked layers) D1922-23) protocol described above. In particular, the first layer 202 may have a modified (no notch, stacked layers) double-layer transverse direction (TD) tear resistance of from about 50g to about 1000g, including from about from about 50g to about 100g, from about 100g to about 200g, from about 200g to about 300g, from about 300g to about 400g, from about 400g to about 500g, from about 500g to about 600g, from about 600g to about 700g, from about 700g to about 800g, from about 800g to about 900g, from about 900g to about 1000g, from about 1000g to about 1100g, from about 1100g to about 1200g, from about 1200g to about 1300g, from about 1300g to about 1400g, from about 1400g to about 1500s, and/or a range having any combination of endpoints thereof.

In embodiments, the first layer 202 may also have a double-layer machine direction (MD) tear resistance of at most 1000g when measured according to the modified (stacked layers, with notch) ASTM D1922 (e.g. modified (stacked layers, with notch) D1922-23) protocol described above. In particular embodiments, the first layer 202 may have a modified (stacked layers, with notch) double-layer machine direction (MD) tear resistance of from about 30g to about 1000g, including from about 30g to about 40g, from about 40g to about 50g, from about 50g to about 60g, from about 60g to about 70g, from about 70g to about 80g, from about 80g to about 90g, from about 90g to about 100g, from about 100g to about 200g, from about 200g to about 300g, from about 300g to about 400g, from about 400g to about 500g, from about 500g to about 600g, from about 600g to about 700g, from about 700g to about 800g, from about 800g to about 900g, from about 900g to about 1000g, and/or a range having any combination of endpoints thereof.

In some embodiments, the first layer 202 may also have a double-layer machine direction (MD) tear resistance of at most 1500g when measured according to the modified (no notch, stacked layers) ASTM D1922 (e.g. modified (no notch, stacked layers) D1922-23) protocol described above. In particular, the first layer 202 may have a modified (no notch, stacked layers) double-layer machine direction (MD) tear resistance of from about 50g to about 1500g, including from about from about 50g to about 100g, from about 100g to about 200g, from about 200g to about 300g, from about 300g to about 400g, from about 400g to about 500g, from about 500g to about 600g, from about 600g to about 700g, from about 700g to about 800g, from about 800g to about 900g, from about 900g to about 1000g, from about 1000g to about 1100g, from about 1100g to about 1200g, from about 1200g to about 1300g, from about 1300g to about 1400g, from about 1400g to about 1500s, and/or a range having any combination of endpoints thereof.

As described herein, the first layer 202 may have a combination of different tear resistances depending on the particular application. As such, depending on the application, the first layer 202 may be designed to have a specific tear characteristics. For example, transverse direction tear resistance may be more relevant for vertical form-fill-seal pouches, whereas machine direction tear resistance may be more important for horizontal form-fill-seal pouches. Accordingly, as described below, the multi-layer laminates 102 and food packaging articles 100 of the present disclosure may be manufactured to advantageously have a particular transverse direction and/or machine direction tear resistance based on the intended application.

The first layer 202 of the multi-layer laminate 102 may have a range of other properties, including combinations thereof. These properties can include, but are not limited to, tensile strength, percent elongation, modulus, coefficient of friction, haze, light transmittance, gloss, clarity, opacity, surface energy, oxygen transmission, and moisture vapor transmission. Unless otherwise noted herein or specified by the identified ASTM protocol, the properties reported are for samples having a thickness of 1.6 mils ± 0.2 mil.

In embodiments, the first layer 202 of the multi-layer laminate 102 may have a tensile strength (machine direction and/or transverse direction) of from at least 5 MPa when measured according to ASTM D882 (e.g. D882-18), Method A. In particular embodiments, first layer 202 can have a tensile strength (machine direction and/or transverse direction) of from about 5 MPa to about 70 MPa, including from about 5 MPa to about 10MPa, from about 10 MPa to about 15 MPa, from about 15 MPa to about 20 MPa, from about 20 MPa to about 30 MPa, from about 30 MPa to about 40 MPa, from about 40 MPa to about 50 MPa, from about 50 MPa to about 60 MPa, from about 60 MPa to about 70 MPa, and/or a range having any combination of endpoints thereof.

In embodiments, the first layer 202 of the multi-layer laminate 102 may have a percent elongation of at most 500% when measured according to ASTM D882 (e.g. D882-18), Method A. In particular embodiments, the first layer 202 can have a percent elongation of less than about 240%, including less than about 200%, less than about 150%, less about 100%, less than about 50%, less than about 25%, less than about 15%, less than about 10%, less than about 5%, less than about 3%, less than about 2%, less than about 1%, and/or a range having any combination of endpoints thereof.

In embodiments, the first layer 202 of the multi-layer laminate 102 may have an oxygen transmission rate of less than 500 cc/100 in²/24 hrs when measured according to ASTM D3985 (e.g. D3985-24) (23°C, 0% RH), including less than about 400 cc/100 in²/24 hrs, less than about 300 cc/100 in²/24 hrs, less than about 200 cc/100 in²/24 hrs, less than about 150 cc/100 in²/24 hrs, less than about 125 cc/100 in²/24 hrs, less than about 100 cc/100 in²/24 hrs, less than about 75 cc/100 in²/24 hrs, less than about 50 cc/100 in²/24 hrs, less than about 25 cc/100 in²/24 hrs, less than about 15 cc/100 in²/24 hrs, less than about 10 cc/100 in²/24 hrs, and/or a range having any combination of endpoints thereof.

In embodiments, the first layer 202 of the multi-layer laminate 102 may have a moisture vapor transmission rate of less than 100 g/100 in²/24 hrs when measured according to ASTM F-1249 (e.g. F-1249-20) (90% RH), including less than about 90 g/100 in²/24 hrs, less than about 80 g/100 in²/24 hrs, less than about 70 g/100 in²/24 hrs, less than about 60 g/100 in²/24 hrs, less than about 50 g/100 in²/24 hrs, less than about 40 g/100 in²/24 hrs, less than about 30 g/100 in²/24 hrs, less than about 20 g/100 in²/24 hrs, less than about 10 g/100 in²/24 hrs, less than about 9 g/100 in²/24 hrs, less than about 8 g/100 in²/24 hrs, less than about 7 g/100 in²/24 hrs, less than about 6 g/100 in²/24 hrs, less than about 5 g/100 in²/24 hrs, less than about 4 g/100 in²/24 hrs, less than about 3 g/100 in²/24 hrs, less than about 2 g/100 in²/24 hrs, less than about 1 g/100 in²/24 hrs, and/or a range having any combination of endpoints thereof.

In embodiments, the first layer 202 of the multi-layer laminate 102 can comprise one or more polymer materials and one or more optional additives. For example, in some embodiments, the first layer 202 may comprise at least one of polyhydroxyalkanoate (PHA), polylactic acid (PLA), polybutylene adipate terephthalate (PBAT), polybutylene succinate (PBS), thermoplastic starch (TPS), starch blended thermoplastic, and/or a cyclic block copolymer (CBC).

As described herein, the polyhydroxyalkanoate (PHA) can be a polymer or copolymer have at least one repeating unit according to Formula (I) shown below: 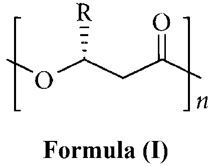 wherein R is hydrogen or an alkyl group, and *n* is an integer greater than 1.

As described herein, the polybutylene adipate terephthalate (PBAT) can be a random copolyester of adipic acid 1,4-butanediol, and terephthalic acid having a chemical structure according to Formula (II) shown below: 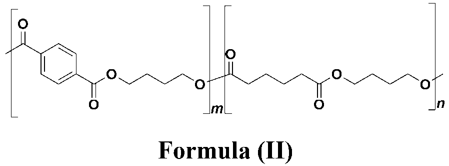 where *m* and *n* are integers greater than 1.

As described herein, the polybutylene succinate (PBS) can be a biodegradable aliphatic polyester having a chemical structure according to Formula (III) shown below: 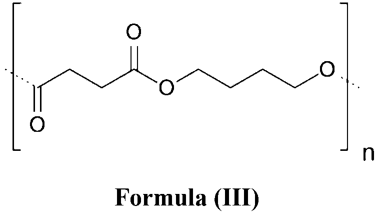 where n is an integer greater than 1.

As described herein, the polylactic acid (PLA) can be a bioplastic made from repeating monomers having the chemical formula C₃H₄O₂ having a chemical structure according to Formula (IV): 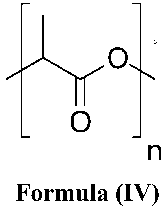 where n is an integer greater than 1.

In embodiments, the one or more optional additives can include, but are not limited to, slip agents, antiblock additives, mineral fillers, nucleating agents, process aids, and/or pigments (e.g., white pigments, etc.). In specific embodiments, the one or more additives can include calcium carbonate.

As described herein, the first layer 202 of the multi-layer laminate 102 can comprise from about 60 wt% to about 100 wt% of the one or more polymer materials based on the total weight of the first layer 202. In particular embodiments, the first layer 202 can comprise from about 60 wt% to about 65 wt%, from about 65 wt% to about 70 wt%, from about 70 wt% to about 75 wt%, from about 75 wt% to about 80 wt%, from about 80 wt% to about 85 wt%, from about 85 wt% to about 90 wt%, from about 90 wt% to about 95 wt%, from about 95 wt% to about 99 wt%, from about 99 wt% to about 100 wt%, of the polymer materials based on the total weight of the first layer 202, and/or a range having any combination of endpoints thereof.

In further embodiments, the first layer 202 of the multi-layer laminate 102 can comprise from about 0 wt% to about 40 wt% of the one or more optional additives, including from about 0 wt% to about 1 wt%, from about 1 wt% to about 2 wt%, from about 2 wt% to about 3 wt%, from about 3 wt% to about 4 wt%, from about 4 wt% to about 5 wt%, from about 5 wt% to about 10 wt%, from about 10 wt% to about 15 wt%, from about 15 wt% to about 20 wt%, from about 20 wt% to about 25 wt%, from about 25 wt% to about 30 wt%, from about 30 wt% to about 35 wt%, from about 35 wt% to about 40 wt%, of the one or more optional additives, based on the total weight of the first layer 202, and/or a range having any combination of endpoints thereof.

In exemplary embodiments, the first layer 202 itself may be a single layer or a multi-layer film that is formed through a blown film coextrusion process. For example, the first layer 202 may comprise three sub-layers formed from the one or more polymers and the one or more optional additives described above. In a specific embodiment, the first sub-layer comprises about 100 wt% of a PHA, the second sub-layer comprises about 90 wt% of the PHA and about 10 wt% of a second polymer containing a white pigment, and the third sub-layer comprises about 100% of the PHA.

In further exemplary embodiments, the PHA resin can be PHACT^{™} CA1270P or PHACT^{™} CA1240PF, which are compounded products composed of polylactic acid (PLA) and an amorphous polyhydroxyalkanoate (aPHA). Other PHA containing materials can also be used as neat or in blends with other polymeric materials. PHA can be amorphous or semi crystalline and can contain additives such as nucleating agents or process aids to help with extrusion process and material functionality.

Returning to FIG. 2, the multi-layer laminate 102 can further include at least a second layer 204 that is bonded to the first layer 202 at a first surface 206 of the second layer 204. In embodiments, the second layer 204 may comprise a metal and/or metal alloy, including but not limited to aluminum and/or copper. In particular embodiments, the second layer 204 may be aluminum foil. In further embodiments, the second layer 204 may be a metallized substrate such as paper, a biopolymer film, and/or thermoplastic film.

As described herein, the second layer 204 of the multi-layer laminate 102 can have a thickness (T2) of from about 3 µm to about 100 µm, including from about 3 µm to about 10 µm, from about 10 µm to about 20 µm, from about 20 µm to about 30 µm, from about 30 µm to about 40 µm, from about 40 µm to about 50 µm, from about 50 µm to about 60 µm, from about 60 µm to about 70 µm, from about 70 µm to about 80 µm, from about 80 µm to about 90 µm, from about 90 µm to about 100 µm, and/or a range having any combination of endpoints thereof.

As shown in the example of FIG. 2, the multi-layer laminate 102 may also include at least a third layer 210 that is bonded to the second layer 204 at a second surface 208 of the second layer 204. In embodiments, the third layer 210 may be a food contact material, i.e., it is safe to contact one or more types of foodstuffs 108.

In embodiments, the third layer 210 can comprise a polymer material selected from the group consisting of polyethylene (PE), polypropylene (PP), polyhydroxyalkanoate (PHA), polybutylene adipate terephthalate (PBAT), polybutylene succinate (PBS), polylactic acid (PLA), cyclic block copolymers (CBC), thermoplastic starch (TPS), and/or a starch blended thermoplastic. The polyhydroxyalkanoate (PHA), the polybutylene adipate terephthalate (PBAT), the polybutylene succinate (PBS), and the cyclic block copolymer may be as described above with respect to the first layer 202. In further embodiments, the polyethylene (PE) can be a polymer or copolymer comprising a repeating unit according to Formula (V) shown below: 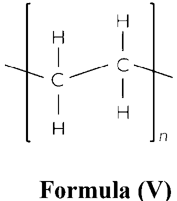 where n is an integer greater than 1.

In specific embodiments, the polyethylene may be a linear low-density polyethylene polymer (LLDPE), a metallocene linear low-density polyethylene (mLLDPE), a high density polyethylene (HDPE), a low-density polyethylene (LDPE), and/or mixtures thereof.

In further embodiments, the third layer 210 can comprise a polymer material that includes a starch-blended thermoplastic polymer. In still further embodiments, the third layer 210 can comprise thermoplastic starch (TPS), which is a form of starch that is combined with water and plasticizers, and then heated and sheared to produce a biodegradable polymer.

In embodiments, the third layer 210 may include from about 50 wt% to about 100 wt% of the polymer materials described above. In particular embodiments, the third layer 210 can comprise from about 50 wt% to about 55 wt%, from about 55 wt% to about 60 wt%, from about 60 wt% to about 65 wt%, from about 65 wt% to about 70 wt%, from about 70 wt% to about 75 wt%, from about 75 wt% to about 80 wt%, from about 80 wt% to about 85 wt%, from about 85 wt% to about 90 wt%, from about 90 wt% to about 95 wt%, from about 95 wt% to about 99 wt%, from about 99 wt% to about 100 wt%, of the polymer materials based on the total weight of the third layer 210, and/or a range having any combination of endpoints thereof.

In embodiments, the third layer 210 may include from about 0 wt% to about 50 wt% of optional additives. In particular embodiments, the third layer 210 can comprise from about 0 wt% to about 5 wt%, from about 5 wt% to about 10 wt%, from about 10 wt% to about 15 wt%, from about 15 wt% to about 20 wt%, from about 20 wt% to about 25 wt%, from about 25 wt% to about 30 wt%, from about 30 wt% to about 35 wt%, from about 35 wt% to about 40 wt%, from about 40 wt% to about 45 wt%, from about 45 wt% to about 50 wt%, of the optional additives based on the total weight of the third layer 210, and/or a range having any combination of endpoints thereof.

In embodiments, the one or more optional additives can include, but are not limited to, slip agents, antiblock additives, mineral filler, nucleating agents, process aids, and/or pigments (e.g., white pigments, etc.). In specific embodiments, the one or more additives can include calcium carbonate.

In exemplary embodiments, the third layer 210 itself may be a multi-layer film that is formed through a blown film coextrusion process. For example, the third layer 210 may comprise three sub-layers formed from the one or more polymers and the one or more optional additives described above. In a specific embodiment, the first sub-layer comprises about 90 wt% of a mLLDPE and about 10 wt% additives (e.g., antislip agent, etc.), the second sub-layer comprises about 50 wt% of a LDPE and about 50 wt% of additives (e.g., calcium carbonate and masterbatch additives), and the third sub-layer comprises about 100% of the LDPE.

In certain aspects, the first layer 202 and the third layer 210 may have similar or identical compositions and similar or identical properties. In other embodiments, the first and third layers 202, 210 may have different compositions and may have different properties These properties can include, but are not limited to, tear resistance, tensile strength, percent elongation, modulus, coefficient of friction, puncture resistance, haze, light transmittance, gloss, clarity, surface energy, oxygen transmission, and moisture vapor transmission.

In embodiments, the third layer 210 may have a machine direction, single layer tear resistance of less than about 600g, and/or a transverse direction, single layer tear resistance of less than about 300g, when measured according to ASTM D1922 (e.g. D1922-23). In particular embodiments, the third layer 202 may have a machine direction, single layer tear resistance of from about 400g to about 600g, including from about 400g to about 450g, from about 450g to about 500g, from about 500g to about 550g, from about 550g to about 600g, and/or a range having any combination of endpoints thereof. In further embodiments, the third layer 202 may have a transverse direction, single layer tear resistance of from about 150g to about 300g, including from about 150g to about 200g, from about 200g to about 250g, from about 250g to about 300g, and/or a range having any combination of endpoints thereof.

In embodiments, the third layer 210 of the multi-layer laminate 102 may have a tensile strength (machine direction or transverse direction) of at least 5 MPa when measured according to ASTM D882 (e.g. D882-18), Method A. In particular embodiments, first layer 202 can have a tensile strength (machine direction and/or transverse direction) of from about 15 MPa to about 70 MPa, including from about 5 MPa to about 20 MPa, from about 20 MPa to about 30 MPa, from about 30 MPa to about 40 MPa, from about 40 MPa to about 50 MPa, from about 50 MPa to about 60 MPa, from about 60 MPa to about 70 MPa, and/or a range having any combination of endpoints thereof.

In embodiments, the third layer 210 of the multi-layer laminate 102 may have a machine direction percent elongation of from about 50% to about 700% when measured according to ASTM D882 (e.g. D882-18), Method A. In particular embodiments, the third layer 210 can have a machine direction percent elongation of from about 50% to about 75%, from about 75% to about 100%, from about 100% to about 150%, from about 150% to about 200%, from about 200% to about 300%, from about 300% to about 400%, from about 400% to about 500 wt%, from about 500% to about 600%, from about 600% to about 700%, and/or a range having any combination of endpoints thereof.

In embodiments, the third layer 210 of the multi-layer laminate 102 may have a transverse direction percent elongation of from about 100% to about 700% when measured according to ASTM D882 (e.g. D882-18), Method A. In particular embodiments, the third layer 210 can have a transverse direction percent elongation of from about 100% to about 150%, from about 150% to about 200%, from about 200% to about 250%, from about 250% to about 300%, from about 300% to about 350%, from about 350% to about 400%, from about 400% to about 450%, from about 450% to about 500%, from about 500% to about 550%, from about 550% to about 600%, from about 600% to about 650%, from about 650% to about 700%, and/or a range having any combination of endpoints thereof.

In embodiments, the third layer 210 of the multi-layer laminate 102 may have a machine direction modulus of between about 2.0×10⁴ and about 2.5×10⁴ when measured according to ASTM D882 (e.g. D882-18), Method A. In particular embodiments, the third layer 210 can have a machine direction modulus of from about 2.0×10⁴ to about 2.1×10⁴, from about 2.1×10⁴ to about 2.2×10⁴, from about 2.2×10⁴ to about 2.3×10⁴, from about 2.3×10⁴ to about 2.4×10⁴, from about 2.4×10⁴ to about 2.5×10⁴, and/or a range having any combination of endpoints thereof.

In embodiments, the third layer 210 of the multi-layer laminate 102 may have a transverse direction modulus of between about 3.0×10⁴ and about 4.0×10⁴ when measured according to ASTM D882 (e.g. D882-18), Method A. In particular embodiments, the third layer 210 can have a transverse direction modulus of from about 3.0×10⁴ to about 3.1×10⁴, from about 3.1×10⁴ to about 3.2×10⁴, from about 3.2×10⁴ to about 3.3×10⁴, from about 3.3×10⁴ to about 3.4% 10⁴, from about 3.4×10⁴ to about 3.5×10⁴, from about 3.5×10⁴ to about 3.6×10⁴, from about 3.6×10⁴ to about 3.7×10⁴, from about 3.7×10⁴ to about 3.8×10⁴, from about 3.8×10⁴ to about 3.9×10⁴, from about 3.9×10⁴ to about 4.0×10⁴, and/or a range having any combination of endpoints thereof.

In embodiments, the third layer 210 of the multi-layer laminate 102 may have a puncture resistance of from about 0.75 to about 4.0 when measured according to ASTM D5748 (e.g. D5748-95(2019)) (with sharp probe).

In embodiments, the third layer 210 of the multi-layer laminate 102 may have a haze of at least 10% when measured according to ASTM D1003-11. In particular embodiments, the third layer 210 can have a haze of from about 10% to about 100%, including from about 10% to about 20%, from about 20% to about 30%, from about 30% to about 40%, from about 40% to about 50%, from about 50% to about 60%, from about 60% to about 70%, from about 70% to about 80%, from about 80% to about 90%, from about 90% to about 100%, and/or a range having any combination of endpoints thereof.

In embodiments, the third layer 210 of the multi-layer laminate 102 may have a light transmittance of at least 50% when measured according to ASTM D1003-11. In particular embodiments, the third layer 210 can have a light transmittance of from about 50% to about 100%, including from about 50% to about 55%, from about 55% to about 60%, from about 60% to about 65%, from about 65% to about 70%, from about 70% to about 75%, from about 75% to about 80%, from about 80% to about 85%, from about 85% to about 90%, from about 90% to about 95%, from about 95% to about 100%, and/or a range having any combination of endpoints thereof.

In embodiments, the third layer 210 of the multi-layer laminate 102 may have a gloss value of from about 20 to about 50, including from about 20 to about 30, from about 30 to about 40, from about 40 to about 50, and/or a range having any combination of endpoints thereof.

In embodiments, the third layer 210 of the multi-layer laminate 102 may have a percent clarity of at least 20%. In particular embodiments, the third layer 210 can have a percent clarity of from about 20% to about 100%, including from about 20% to about 30%, from about 30% to about 40%, from about 40% to about 50%, from about 50% to about 55%, from about 55% to about 60%, from about 60% to about 65%, from about 65% to about 70%, from about 70% to about 75%, from about 75% to about 80%, from about 80% to about 85%, from about 85% to about 90%, from about 90% to about 95%, from about 95% to about 100%, and/or a range having any combination of endpoints thereof.

In embodiments, the third layer 210 of the multi-layer laminate 102 may have a surface energy of from about 30 to about 50 dynes/cm, including about 30 dynes/cm, about 31 dynes/cm, about 32 dynes/cm, about 33 dynes/cm, about 34 dynes/cm, about 35 dynes/cm, about 36 dynes/cm, about 37 dynes/cm, about 38 dynes/cm, about 39 dynes/cm, about 40 dynes/cm, about 41 dynes/cm, about 42 dynes/cm, about 43 dynes/cm, about 44 dynes/cm, about 45 dynes/cm, about 46 dynes/cm, about 47 dynes/cm, about 48 dynes/cm, about 49 dynes/cm, about 50 dynes/cm, and/or a range having any combination of endpoints thereof.

In embodiments, the third layer 210 of the multi-layer laminate 102 may have an oxygen transmission rate of less than 10 cc/100 in²/24 hrs when measured according to ASTM D3985 (e.g. D3985-24) (23°C, 0% RH), including about 10 cc/100 in²/24 hrs, about 9 cc/100 in²/24 hrs, about 8 cc/100 in²/24 hrs, about 7 cc/100 in²/24 hrs, about 6 cc/100 in²/24 hrs, about 5 cc/100 in²/24 hrs, about 4 cc/100 in²/24 hrs, about 3 cc/100 in²/24 hrs, about 2 cc/100 in²/24 hrs, about 1 cc/100 in²/24 hrs, and/or a range having any combination of endpoints thereof.

In embodiments, the third layer 210 of the multi-layer laminate 102 may have a moisture vapor transmission rate of less than 5 g/100 in²/24 hrs when measured according to ASTM F-1249 (e.g. F-1249-20) (90% RH), including about 5 g/100 in²/24 hrs, about 4.5 g/100 in²/24 hrs, about 4.0 g/100 in²/24 hrs, about 3.5 g/100 in²/24 hrs, about 3.0 g/100 in²/24 hrs, about 2.5 g/100 in²/24 hrs, about 2.0 g/100 in²/24 hrs, about 1.5 g/100 in²/24 hrs, about 1.0 g/100 in²/24 hrs, about 0.5 g/100 in²/24 hrs, and/or a range having any combination of endpoints thereof.

As shown in the example of FIG. 2, the multi-layer laminate 102 may comprise three layers that are laminated together through adhesive lamination, extrusion lamination, and/or heat lamination. However, it should be appreciated that other arrangements of the layers are possible. In some embodiments, the multi-layer laminate 102 may contain only two layers. For example, in particular embodiments, the second layer 204 may be omitted and the first and third layers 202, 210 may be laminated together directly.

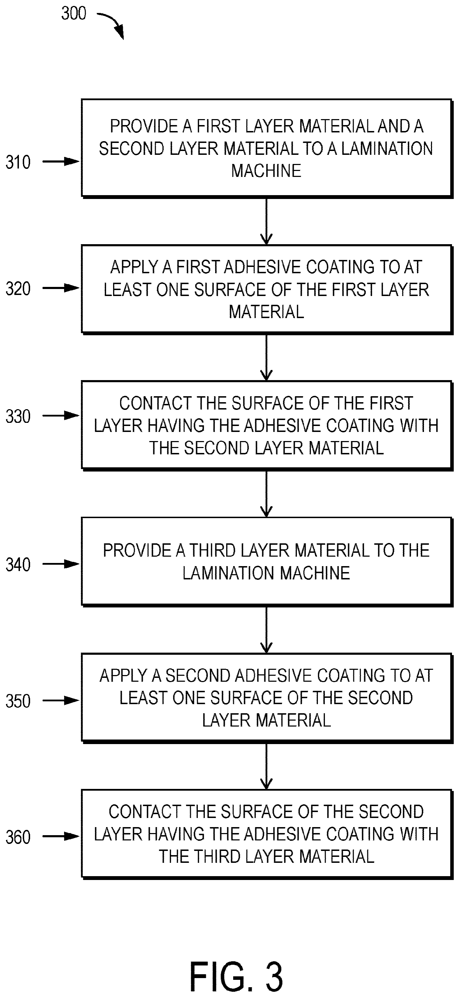

Also provided herein are methods of manufacturing a multi-layer laminate (e.g., laminate 102) for a food packaging article. For example, with reference to FIG. 3, a method 300 of manufacturing such a multi-layer laminate is illustrated according to aspects of the present disclosure. In embodiments, the method 300 comprises: in a step 310, providing a first layer material and a second layer material to a lamination machine; in a step 320, applying a first adhesive coating to at least one surface of the first layer material; and in a step 330, contacting the surface of the first layer having the adhesive coating with the second layer material. In some embodiments, the method 300 can further include: in a step 340, providing a third layer material to the lamination machine; in a step 350, applying a second adhesive coating to at least one surface of the second layer material; and in a step 360, contacting the surface of the second layer having the adhesive coating with the third layer material.

In embodiments, the first layer material 202, the second layer material 204, and the third layer material 210 may be provided in a rolled format (i.e., wound around a core support), which may be unwound and fed into the lamination machine.

In certain embodiments, the first layer material 202 and/or the third layer material 210 may be provided in raw materials and formed through a blown film, cast film, or extrusion coating process. In further embodiments, the first and/or third layers 202, 210 may be provided as a liquid coating capable of forming a film on the second layer 204. That is, in some embodiments, the first and/or third layers 202, 210 can be bonded to the second layer 204 by liquid coating technologies, including but not limited to gravure coating, flexo print coating, smooth roll coating, or air knife coating. Exemplary blown film extrusion processes are described in more detail below with respect to the Examples.

In still further embodiments, the first layer 202 may be UV treated, corona treated, e-beam irradiated, gamma irradiated or coated with a heat resistance over lacquer to increase the heat or scuff resistance of the layer.

In embodiments, the adhesive coatings may be solvent-based, solventless, or water-based adhesives. For example, in some embodiments, the first adhesive coating may be a two-part solvent-based aromatic adhesive with use of a white pigmented substrate or a two-part solvent-based white pigmented aliphatic or aromatic adhesive. In further embodiments, the second adhesive coating may be a two-part solvent-based aromatic adhesive.

In certain embodiments, the intermediate laminate formed from the first and second layer materials 202, 204 may be rewound onto a support while the lamination machine is prepped for the third layer material 210, or in order to transfer the intermediate laminate to another lamination machine. In such embodiments, the intermediate laminate may then be unwound again and passed through a second coating section where the second adhesive coating is applied. At the end of the process, the final laminate containing the first, second, and third layer materials 202, 204, 210 may be rewound onto a support for further storage, transport, and/or further processing.

In other embodiments, the lamination machine may comprise a turn bar section configured to convey the intermediate laminate to a second machine or flip the intermediate laminate to the opposite side for further processing.

Although the method 300 illustrates an adhesive coating lamination method, it should be appreciated that one or more of the layers 202, 204, 210 may be laminated together using other or different methods, including but not limited to extrusion and/or heat lamination.

### EXAMPLES

In accordance with aspects of the present disclosure, various tests were performed on the samples discussed below using corresponding ASTM standards. For example, tensile strength, elongation, and modulus were measured according to ASTM D882 (e.g. D882-18), Method A, Elmendorf tear resistance was measured according to ASTM D1922 (e.g. D 1922-23) (or according to a modified ASTM D1922 (e.g. modified D1922-23) as described above), coefficient of friction was measured according to ASTM D1894 (e.g. D1894-11e1, puncture resistance was measured according to ASTM D5748 (e.g. D5748-95(2019)) (with sharp probe) haze and light transmittance were measured according to ASTM D1003-11, oxygen transmission was measured according to ASTM D3985 (e.g. D3985-24) (@ 23°C, 0% RH), and moisture vapor transmission was measured according to ASTM F-1249 (e.g. F-1249-20) (@ 100°F, 90% RH).

### First Trial Layer Composition and Formation

In a first trial, an exemplary first layer (e.g., layer 202) used for an outermost layer of a multi-layer laminate 102 was formed using a blown film coextrusion process. This exemplary first layer 202 contained three distinct sub-layers formed simultaneously through this blown film coextrusion process. In this trial, the first sub-layer contained a PHA resin with a density of 1.65g/cc and 3-5 melt index (measured according to ASTM 1238 at 2.16kg and 190C (e.g. ASTM D1238-23A)), the second sub-layer contained the same PHA resin, the third sub-layer contained the same PHA resin, the breakdown of which are shown in the table below:

**TABLE 1. FIRST TRIAL, FIRST LAYER COMPOSITION**

| **Sub-Layer** | **Thickness (mil)** | **Description** |
|---|---|---|
| 1 | 0.25 | PHA |
| 2 | 0.5 | PHA |
| 3 | 0.25 | PHA |

The running conditions for the blown film coextrusion processes are as follows: A 3 layer blown film line was used, extruder temperature zones set between 190°F and 320°F, die temperature zones set between 300°F and 310°F, die diameter was 19.7 inches and blow up ratio was set at about 2.7.

Two batches of this formulation were manufactured and tested, the results of which are shown in the tables below:

**TABLE 2. FIRST TRIAL TESTING RESULTS**

| **Property** | **Units** | **Batch 1** | **Batch 2** |
|---|---|---|---|
| **Size** | | | |
| Guage | (mils) | 1.77 | 1.61 |
| | | | |

| **Physical** | | | |
|---|---|---|---|
| Tensile Strength (MD) | (psi) | 2540.2 | 3227.0 |
| Tensile Strength (TD) | (psi) | 2610.0 | 2853.9 |
| Elongation (MD) | (%) | 197.8 | 186.9 |
| Elongation (TD) | (%) | 219.6 | 236.1 |
| | | | |

| *1-Layer Tear Test* | | | |
|---|---|---|---|
| Elmendorf Tear (MD) | (g) | 61 | 58 |
| Elmendorf Tear (TD) | (g) | 96 | 96 |
| | | | |

| *1-Layer, No Notch Tear Test* | | | |
|---|---|---|---|
| Elmendorf Tear (TD) | (g) | 304 | 352 |
| | | | |

| *2-Layer, With Notch Tear Test* | | | |
|---|---|---|---|
| Elmendorf Tear (TD) | (g) | 230 | 253 |
| | | | |

| *2-Layer, No Notch Tear Test* | | | |
|---|---|---|---|
| Elmendorf Tear (TD) | (g) | 467 | 480 |
| | | | |

**TABLE 2. FIRST TRIAL TESTING RESULTS**

| **Property** | **Units** | **Batch 1** | **Batch 2** |
|---|---|---|---|
| | | | |

| **Barrier** | | | |
|---|---|---|---|
| Oxygen Transmission | * | 32.0 | 56.7 |
| Moisture Vapor Transmission | ** | 3.2 | 4.4 |

| | | | |
|---|---|---|---|
| * having units cc/100 in²/24 hrs, measured at 23°C and 0% RH ** having units grams/100 in²/24 hrs, measured at 90% RH | | | |

### Second Trial Layer Composition and Formation

In a second trial, another exemplary layer (e.g., layer 202) used for an outermost layer of a multi-layer laminate 102 was formed using a blown film coextrusion process. This exemplary layer contained three distinct sub-layers formed simultaneously through this blown film coextrusion process. In this example, the first sub-layer contained 0.75 melt index and 0.919 g/cm³ LDPE, CBC (density of 0.94g/cm³ and 35 melt index measure per ASTM 1238, 2.16kg and 230°C (e.g. ASTM D1238-23A)) and additives, the second sub-layer contained a 1 melt index and 0.920 g/cm³ LLDPE and additives the third sub-layer contained 0.75 melt index and 0.919 g/cm³ LDPE, the fourth layer contained a 1 melt index and 0.919 g/cm³ LLDPE and the fifth layer contained CBC, the breakdown of which are shown in the table below:

**TABLE 3. SECOND TRIAL LAYER COMPOSITION**

| **Sub-Layer** | **Thickness (mil)** | **Description** |
|---|---|---|
| 1 | 0.21 | LDPE+CBC |
| 2 | 0.63 | LLDPE + Additives |
| 3 | 0.15 | LDPE |
| 4 | 0.1 | LLDPE |
| 5 | 0.31 | CBC |

The running conditions for the blown film coextrusion processes are as follows: A 5 layer blown film line was used, extruder temperature zones set between 340°F and 450°F, die temperature zones set between 390°F-420°F, blow up ratio was set at 1.7.

This formulation was manufactured and tested, the results of which are shown in the tables below:

**TABLE 4. SECOND TRIAL TESTING RESULTS**

| **Property** | **Units** | **Batch 1** |
|---|---|---|
| **Size** | | |
| Guage | (mils) | 1.4 |
| | | |

| **Physical** | | |
|---|---|---|
| Tensile Strength (MD) | (psi) | 2268 |
| Tensile Strength (TD) | (psi) | 1882 |
| Elongation (MD) | (%) | 48 |
| Elongation (TD) | (%) | 4 |
| | | |

| *1-Layer Tear Test* | | |
|---|---|---|
| Elmendorf Tear (MD) | (g) | 535 |
| Elmendorf Tear (TD) | ' | 183 |

### Third Trial Layer Composition and Formation

In yet another example, a layer (e.g., layer 210) used for the innermost layer of a multi-layer laminate 102 was formed using a blown film coextrusion process. This exemplary layer contained three distinct sub-layers formed simultaneously through this blown film coextrusion process. In this example, the first sub-layer contained a 6 melt index and 0.9 g/cm³ density mLLDPE and additives such as antiblock, pigment, slip or inorganic minerals, the second sub-layer contained a 1MI and 0.919 g/cm³ LDPE and additives such as antiblock, pigment, slip or inorganic minerals, and the third sub-layer contained a 1MI and 0.919 g/cm³ LDPE, the breakdown of which are shown in the table below:

**TABLE 5. THIRD TRIAL LAYER COMPOSITION**

| **Sub-Layer** | **Thickness (mil)** | **Description** |
|---|---|---|
| 1 | 0.35 | mLLDPE + Additives |
| 2 | 0.4 | LDPE + Additives |
| 3 | 0.25 | LDPE |

The running conditions for the blown film coextrusion processes are shown in the tables below. Die temperature zones set between 370°F and 450°F.

Three batches of this formulation were manufactured and tested, the results of which are shown in the tables below:

**TABLE 6. THIRD TRIAL TESTING RESULTS**

| **Property** | **Units** | **Batch 1** | **Batch 2** | **Batch 3** |
|---|---|---|---|---|
| **Size** | | | | |
| Guage | (mils) | 1.48 | 1.42 | 1.5 |
| | | | | |

| **Physical** | | | | |
|---|---|---|---|---|
| Tensile Strength (MD) | (psi) | 2611 | 2899 | 2732 |
| Tensile Strength (TD) | (psi) | 2099 | 2504 | 2316 |
| | | | | |

| *1-Layer Tear Test* | | | | |
|---|---|---|---|---|
| Elmendorf Tear (MD) | (g) | 493 | 518 | 518 |
| Elmendorf Tear (TD) | (g) | 160 | 173 | 198 |
| | | | | |

| Other | | | | |
|---|---|---|---|---|
| Oxygen Transmission | * | | 4.921392 | |
| Moisture Vapor Transmission | ** | 0.6009 | 0.654 | 0.61698 |

| | | | | |
|---|---|---|---|---|
| * having units cc/100 in²/24 hrs ** having units grams/100 in²/24 hrs | | | | |

### Exemplary Lamination Processes

Exemplary lamination process parameters were also developed for manufacturing a multi-layer laminate 102 formed from a PHA-containing first layer 202, an aluminum foil-containing second layer 204, and a polyethylene-containing third layer 210. According to this specific example, a two-step adhesive lamination process was used. In the first step, the PHA-containing first layer 102 was bonded with the aluminum foil-containing second layer 204 using a first adhesive coating to form an intermediate laminate. In the second step, the intermediate laminate was bonded to the PE-containing third layer 210 using a second adhesive coating. The type of adhesive was a solvent based adhesive.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

All definitions, as defined and used herein, should be understood to control over dictionary definitions, definitions in documents incorporated by reference, and/or ordinary meanings of the defined terms. Unless otherwise defined, all technical and scientific terms used herein have the same meaning as commonly understood by one of ordinary skill in the art. The materials, methods, and examples disclosed herein are illustrative only and not intended to be limiting.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The terms "first", "second", "third", and the like, as used herein, do not denote any order, quantity, or importance, but rather are used to distinguish one element from another.

For the recitation of numeric ranges herein, each intervening number there between with the same degree of precision is explicitly contemplated. For example, for the range of 6-9, the numbers 7 and 8 are contemplated in addition to 6 and 9, and for the range 6.0-7.0, the number 6.0, 6.1, 6.2, 6.3, 6.4, 6.5, 6.6, 6.7, 6.8, 6.9, and 7.0 are explicitly contemplated.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. In at least some instances, the approximating language may correspond to the precision of an instrument for measuring the value. The modifier "about" should also be considered as disclosing the range defined by the absolute values of the two endpoints. For example, the expression "from about 2 to about 4" also discloses the range "from 2 to 4." The term "about" may refer to plus or minus 10% of the indicated number. For example, "about 10%" may indicate a range of 9% to 11%, and "about 1" may mean from 0.9-1.1. Other meanings of "about" may be apparent from the context, such as rounding off, so, for example "about 1" may also mean from 0.5 to 1.4.

Additionally, for the recitations of numeric amounts and ranges herein, terms such as "less than about X" and "at least about X" should be interpreted as also explicitly disclosing "about X". For example, "less than about 3 g/10 min." expressly contemplates "about 3 g/10 min.", and "at least 60 g/10 min." expressly contemplates "about 60 g/10 min."

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, the aldehyde group -CHO is attached through the carbon of the carbonyl group.

As used herein, the terms "wt %" or "weight percent" denote the amount (i.e., weight) of a component per 100 units of the composition (i.e., 1 wt % of component A based on the weight of the composition is equivalent to 1 gram of A per 100 grams of the composition).

The terms "ambient temperature" and "room temperature" refer to a temperature of 20° C to 25° C.

The present disclosure may refer to temperatures for certain process steps. It is noted that these generally refer to the temperature at which the heat source (e.g., furnace, extrusion machine, etc.) is set, and do not refer to the temperature which must be attained by the material being exposed to the heat.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, the aldehyde group -CHO is attached through the carbon of the carbonyl group.

The present disclosure refers to "polymers," "oligomers", and "compounds". A polymer is a large molecule composed of multiple repeating units chained together, the repeating units being derived from a monomer. One characteristic of a polymer is that different molecules of a polymer will have different lengths, and a polymer is described as having a molecular weight that is based on the average value of the chains (e.g., weight average or number average molecular weight). The art also distinguishes between an "oligomer" and a "polymer", with an oligomer having only a few repeating units, while a polymer has many repeating units. For purposes of this disclosure, the term "oligomer" refers to such molecules having a weight average molecular weight of less than 15,000, and the term "polymer" refers to molecules having a weight average molecular weight of 15,000 of more, as measured by GPC using polycarbonate molecular weight standards. In contrast, for a compound, all molecules will have the same molecular weight. Compared to a polymer, a compound is a small molecule.

The term "homopolymer" as used herein refers to a polymer derived from only one structural unit or monomeric species.

The term "copolymer" refers to a polymer derived from two or more structural unit or monomeric species, as opposed to a homopolymer, which is derived from only one structural unit or monomer.

The term "amorphous" used in connection with a polymer means that the polymer chains exhibit no long-range order. In contrast, the term "crystalline" used in connected with a polymer means that the polymer chains form orderly stacks of folded chains. In this context, a polymer may have a degree of crystallinity ranging from 0% (i.e., completely amorphous) to 100% (i.e., completely crystalline). Amorphous solids do not have a melting point, but rather have a glass transition temperature (Tg).

The terms "glass transition temperature" or "Tg" refer to a temperature or range of temperatures over which the polymer chains of a polymer material become able to rotate or move in space. Below the glass transition temperature, the polymer material may have a glassy state that is hard, rigid, and brittle, while within or above the glass transition temperature, the polymer material has a rubbery state that is softer and more flexible. The glass transition temperature may be measured using a differential scanning calorimetry method and expressed in degrees Celsius.

The term "hydrocarbon" refers to an organic compound consisting entirely of hydrogen and carbon atoms. As used herein, a "saturated hydrocarbon" contains only single bonds between carbon atoms, while an "unsaturated hydrocarbon" contains a double or a triple bond between two adjacent carbon atoms.

The term "aliphatic" refers to a linear or branched array of atoms that is not aromatic. The backbone of an aliphatic group is composed exclusively of carbon. The aliphatic group may be substituted or unsubstituted. Exemplary aliphatic groups include, but are not limited to, methyl, ethyl, isopropyl, hexyl, and cyclohexyl.

The term "aromatic" refers to a radical having a ring system containing a delocalized conjugated pi system with a number of pi-electrons that obeys Hückel's Rule. The ring system may include heteroatoms such as nitrogen, sulfur, selenium, silicon and oxygen, or may be composed exclusively of carbon and hydrogen. Exemplary aromatic groups include, but are not limited to, phenyl, pyridyl, furanyl, thienyl, naphthyl and biphenyl.

The term "alkyl" refers to a radical composed entirely of carbon atoms and hydrogen atoms which is fully saturated. The alkyl radical may be linear, branched, or cyclic, and such radicals may be referred to as linear alkyl, branched alkyl, or cycloalkyl.

The term "aryl" refers to an aromatic radical composed exclusively of carbon and hydrogen. Exemplary aryl groups include phenyl, naphthyl, and biphenyl.

The term "heteroaryl" refers to an aromatic radical containing at least one heteroatom. Exemplary heteroaryl groups include thienyl. Note that "heteroaryl" is a subset of "aromatic", and is exclusive of "aryl".

The term "alkoxy" refers to an alkyl radical which is attached to an oxygen atom, i.e. -O-CₙH₂ₙ₊₁, to a molecule containing such a radical.

The term "halogen" refers to fluorine, chlorine, bromine, and iodine.

The term "substituted" refers to at least one hydrogen atom on the named radical being substituted with another functional group, such as halogen, -CN, or -NO₂. Besides the aforementioned functional groups, an aromatic group may also be substituted with alkyl or alkoxy. An exemplary substituted aryl group is methylphenyl.

The term "alkali metal" refers to lithium, sodium, and potassium.

The term "alkaline earth metal" refers to magnesium and calcium.

It should be appreciated that during molding or fabrication processes, polymer compositions can undergo polymer crystal growth at a plurality of nucleation sites. As used herein, the term "nucleating agent" describes compounds and/or compositions that may be added to polymers that provide additional nucleation sites (i.e., facilitate nucleation at additional locations) for polymer crystal growth during the cooling stage(s) of such molding and/or fabrication processes.

The term "haze" refers to the percentage of transmitted light, which in passing through a specimen deviates from the incident beam by forward scattering. Percent (%) haze may be measured according to ASTM D1003 (e.g. D1003-11).

The term "Melt Volume Rate" (MVR) or "Melt Flow Rate (MFR)" refers to the flow rate of a polymer in a melt phase as determined using the method of ASTM D1238. The MVR of a molten polymer is measured by determining the amount of polymer that flows through a capillary of a specific temperature over a specified time using standard weights at a fixed temperature. MVR is expressed in cubic centimeter per 10 minutes, and MFR is expressed in grams per 10 minutes. The higher the MVR or MFR value of a polymer at a specific temperature, the greater the flow of that polymer at that specific temperature.

It should also be understood that, unless clearly indicated to the contrary, in any methods claimed herein that include more than one step or act, the order of the steps or acts of the method is not necessarily limited to the order in which the steps or acts of the method are recited.

## Claims

1. A multi-layer laminate comprising:
a first layer comprising at least one polymer material selected from the group consisting of a polyhydroxyalkanoate (PHA), a polybutylene adipate terephthalate (PBAT), a polybutylene succinate (PBS), polylactic acid (PLA), thermoplastic starch (TPS), starch blended thermoplastic, and a cyclic block copolymer (CBC), wherein the first layer has a thickness of from about 4 µm to about 100 µm, and wherein the first layer has a machine direction (MD) Elmendorf tear resistance of at most about 600 g and/or a transverse direction (TD) Elmendorf tear resistance of at most about 600 g.

2. The multi-layer laminate of claim 1, wherein the first layer has a machine direction (MD) Elmendorf tear resistance of from about 20 g to about 300 g and/or a transverse direction (TD) Elmendorf tear resistance of about 20 g to about 300 g.

3. The multi-layer laminate of claim 1 or claim 2, wherein the first layer comprises:
from about 40 wt% to about 100 wt% of the polymer material based on the total weight of the first layer; and
from about 0 wt% to about 60 wt% of one or more additives based on the total weight of the first layer.

4. The multi-layer laminate of any preceding claim , further comprising:
a second layer having a first surface bonded to the first layer, wherein the second layer comprises a metal and/or metal alloy preferably comprising aluminum or copper, and wherein the second layer has a thickness of from about 3 µm to about 100 µm.

5. The multi-layer laminate of claim 4, wherein the first and second layers are bonded together through: (i) adhesive lamination using a chemical adhesive; (ii) extrusion lamination; or (iii) heat lamination.

6. The multi-layer laminate of claim 4 or claim 5, further comprising:
a third layer bonded to a second surface of the second layer and comprising a polymer material selected from the group consisting of a polyethylene (PE), a polyhydroxyalkanoate (PHA), a polybutylene adipate terephthalate (PBAT), a polybutylene succinate (PBS), a cyclic block copolymer (CBC), polylactic acid (PLA), starch blended thermoplastic, and a thermoplastic starch (TPS), wherein the third layer has a thickness of from about 4 µm to about 100 µm, and wherein the third layer has a machine direction (MD) Elmendorf tear resistance of at most about 600 g and/or a transverse direction (TD) Elmendorf tear resistance of at most about 600 g.

7. The multi-layer laminate of claim 6, wherein the third layer comprises:
from about 40 wt% to about 100 wt% of the polymer material based on the total weight of the third layer; and
from about 0 wt% to about 60 wt% of a mineral filler based on the total weight of the third layer.

8. The multi-layer laminate of claim 6 or claim 7, wherein the third layer has a machine direction (MD) Elmendorf tear resistance of from about 20 g to about 300 g and/or a transverse direction (TD) Elmendorf tear resistance of about 20 g to about 300 g.

9. The multi-layer laminate of any one of claims 6 to 8, wherein the second and third layers are bonded together through: (i) adhesive lamination using a chemical adhesive; (ii) extrusion lamination; or (iii) heat lamination.

10. The multi-layer laminate of any one of claims 6 to 9, wherein the first and third layers have the same composition.

11. A food-packaging article formed from a multi-layer laminate according to any one of the preceding claims.
wherein the food-packaging article is a stick pouch or a sachet.

12. A method of manufacturing a multi-layer laminate, the method comprising:
providing a first layer material and a second layer material to a lamination machine;
applying a first adhesive coating to at least one surface of the first layer material; and
contacting the surface of the first layer material having the first adhesive coating with the second layer material, wherein the first layer material comprises at least one polymer material selected from the group consisting of a polyhydroxyalkanoate (PHA), a polybutylene adipate terephthalate (PBAT), a polybutylene succinate (PBS), polylactic acid (PLA), starch blended thermoplastic, thermoplastic starch (TPS), and a cyclic block copolymer (CBC),
wherein the first layer material forms a first sheet having a thickness of from about 4 µm to about 100 µm, and wherein the first sheet has a machine direction (MD) Elmendorf tear resistance and/or a transverse direction (TD) Elmendorf tear resistance of at most about 600 g, and
wherein the method further comprises forming the first sheet from the first layer material through a blown film, cast film, extrusion coating process, or liquid coating.

13. The method of claim 12, wherein the second layer material comprises a metal and/or metal alloy, and wherein the second layer material forms a second sheet having a thickness of from about 3 µm to about 100 µm.

14. The method of claim 12 or claim 13, further comprising:
providing a third layer material to the lamination machine;
applying a second adhesive coating to at least one surface of the second layer material; and
contacting the surface of the second layer material having the second adhesive coating with the third layer material.

15. The method of claim 14, wherein the third layer material comprises a polymer material selected from the group consisting of a polyethylene (PE), a polypropylene (PP), a polyester, a polyamide, a polyhydroxyalkanoate (PHA), a polybutylene adipate terephthalate (PBAT), a polybutylene succinate (PBS), a cyclic block copolymer (CBC), polylactic acid (PLA), starch blended thermoplastic, and a thermoplastic starch (TPS),
wherein the third layer material forms a third sheet having a thickness of from about 4 µm to about 100 µm, and wherein the third sheet has a machine direction (MD) Elmendorf tear resistance of at most about 600 g and/or a transverse direction (TD) Elmendorf tear resistance of at most about 600 g, and
wherein the method further comprises
forming the third sheet from the third layer material through a blown film, cast film, extrusion coating process, or liquid coating.
